Europäisches Patentamt

European Patent Office

Office européen des brevets

(19)

(11) **EP 0 913 323 A1**

(12) **EUROPEAN PATENT APPLICATION**
published in accordance with Art. 158(3) EPC

(43) Date of publication:
06.05.1999 Bulletin 1999/18

(51) Int. Cl.$^6$: **B62M 9/08**, B62M 1/02

(21) Application number: 97931818.5

(86) International application number:
PCT/ES97/00176

(22) Date of filing: 14.07.1997

(87) International publication number:
WO 98/02344 (22.01.1998 Gazette 1998/03)

(84) Designated Contracting States:
AT BE CH DE DK FI FR GB GR IE IT LI NL PT SE

(30) Priority: 15.07.1996 ES 9601579

(71) Applicant:
Rotor Componentes Technologicos S.L.
28015 Madrid (ES)

(72) Inventor:
CARRASCO VERGARA, Pablo
29017 Malaga (ES)

(54) **HUMAN TRACTION BY MEANS OF INDEPENDENT SYNCHRONIZED PEDALS WITH SINE-TYPE VARIABLE DEVELOPMENT, IMPROVEMENTS THERETO**

(57)    The improvements consist in that the mechanism comprises two pairs of elliptic gears, both pairs being mounted on a same side of the frame, while leaving on the other side a space sufficient to mount various front chainwheels for changing gears. One of the pairs of gears is mounted on the main crank axle, and the other pair, of which the gears are in mesh with the prior ones, is mounted on a secondary axle. The traction from one of the rods is effected directly by means of a chain while the opposite rod is affected by the transmission, through the gears. The front chainwheel used in the mechanism is excentric and ovoid, and its shape is the result of taking the evolvent of straight lines which is adopted at each instant by the chain for the transmission between the front chainwheel and the gear, when the development variation of said front chain wheel is sinusoidal in refenence to time, for a constant speed of the bicycle to which is applied the mechanism.

FIG. 3:

Printed by Xerox (UK) Business Services
2.16.7/3.6

**Description**

The invention relates to some improvements introduced in the contents of the Spanish Invention Patent P9402381, referred to a human drive system using synchronized independent pedals with sinusoidal type variable development, being the content of the Improvements Patent Application hereby a particular variation of the solution based on an independent pedals transmission by means of two chains and two eccentric chain wheels, synchronized by means of elliptic gears, so that the specific layout contained in this Improvements Patent Application allows eliminating one of the chains, together with its corresponding chain wheel, sprocket wheel and gear shift or tension pulley, thus permitting the installation of two pairs of gears on one of the sides of the frame, so that power is transmitted from said gears to a single chain, which drives the sprocket wheel on the rear wheel of the bicycle.

The aim of the system described in spanish Invention Patent P9402381,is increasing pedalling performance, achieving a more uniform legs power delivery than in traditional bicycles, and achieving an increase in average power output for the same level of effort, improving this way the quality of effort.

In order to achieve these performances, the independent pedal drive system corresponding to said invention patent is based on eliminating the 180° offsetting link between the pedals in order to vary the leg's kinematics so that each leg slowly covers the first quadrant, gradually increasing in speed up to the third quadrant and minimizing thus the time spent in passing through this third one. Thus, when the right pedal is leaving a "good" zone (where most of the work is performed), the left pedal advances to avoid both legs from coinciding in the "dead" zones (one up and the other down) midway between quadrants 2 and 4. The resulting effect is that one leg cooperates with the other leg at a point where the latter starts to lose efficiency in the effort being provided.

Thus, for a constant chain speed, the rotation speed of the pedal is required to vary in time according to a sinusoidal type function (of a period equal to the cycle) as a direct result of the mechanism being used. The effect achieved consists in that the power curve per leg in the time frame of one cycle is "stretched" for the efficient area in order to cover a more extensive area. In this manner, in the curve display for both legs, the curves cross in points of a larger ordinate so that the minimum power is increased to achieve a more even full power and work in each cycle, thus providing a considerably increased mean power.

Thus, that main Invention Patent describes two geometric possibilities of obtaining a mechanism providing the desired kinematics, as previously described. One possibility is based on independent drive systems for each pedal involving two chains and eccentric chain wheels so that each pedal rod is integral with its own chain wheel, both rotating freely in relation to the axle onto which they are mounted. The chain wheels comprise a circular ring gear attached to the pedal rod by means of an eccentric "star", the eccentricity-determining parameter being designated by $\delta$ (chain wheel off-centering / primitive radius of the ring gear). Each chain wheel moves its individual chain (one on each side of the bicycle) which transmits power to the rear bicycle wheel through a sprocket wheel provided for each chain. A tension pulley must be fitted on each chain.

The second geometric possibility of obtaining the mechanism is based on an independent elliptic drive for each pedal through a single circular chain wheel. In this case, the purpose is to transmit through elliptic gears all the power to the chain wheel, which coordinates the pedal kinematics; the mechanism therefore comprises two axles in this case, on one of which are mounted the pedal rods and corresponding ellipses, so that the angle formed by the pedal rod and the largest radius of the ellipse must in each situation be such that when drive is generated at that point, the pedal is located at maximum torque point, approximately 90° forward from the vertical upper position.

Both ellipses are mounted on the same side, one being integral to the axle and the other having its pedal rod mounted to rotate freely in regard to said axle, the axle passing through one of the ellipse's focuses. Two additional ellipses are mounted on a second axle, engaging the latter ellipses so that the force received by said second ellipses is transmitted to the second axle and from said axle, through a gear drive, to the corresponding chain wheel mounted freely on the first axle, proceeding from said chain wheel on to the standard drive chain.

Some improvements were described in a first Improvements Patent referred to the main Invention Patent, said improvements characterized by a transmission, independent for each pedal, consisting of two chains and two eccentric chain wheels synchronized by means of elliptic gears, determining an alternative layout within the concept claimed in the main Invention Patent.

This mechanism can be considered a mixed layout, composed of the two ones claimed in the main Invention Patent. As in the first mechanism, each pedal rod is integral with its own chain wheel, being independent from the other pedal rod-chain wheel assembly.

The chain wheels are (standard) circular ring gears attached to the pedal rod through an eccentric star (or spider); the $\delta$-designated parameter (chain wheel off-centering / primitive radius of the chain wheel) establishes the eccentricity. Thus, each chain wheel drives its own chain to transmit power to the bicycle wheel through corresponding sprocket wheels. A tension pulley ("shift") is necessary for each chain. The angle formed by the pedal rod and the largest radius of the chain wheel must be such that when the chain wheel acts on the chain with the largest radius (maximum torque point), the pedal is positioned forward (approximately 90° from its top position).

In order to achieve this full synchronization, two pairs of elliptic gears are coupled (the same way as in the second mechanism described in the main Invention Patent), and therefore it is necessary adding a secondary axle, the rotation of which determines the offsetting between both pedals.

The difference with the first mechanism is that a device is incorporated to provide full synchronization to the pedalling; the difference in respect to the second mechanism lies in that power output from the pedal rods goes directly to the bicycle wheel through the chains, without the need to travel twice (both ways) through a gear drive (thus avoiding subsequent losses). In this manner, the gears in this mechanism are required solely to synchronize the pedalling action.

In order to satisfactorily achieve this purpose, i.e. that the main power does not pass through the gears, "freewheel" sprocket wheels must be used for each pedal so that no linkage exists between them other than the one imposed by the bicycle wheel. Furthermore, $\delta > 2 \cdot \varepsilon$ is necessary; e.g., for ellipses taken from $\varepsilon = 0.125$, the value of $\delta$ selected could be 0.26 (>0.25).

One of the improvements (to the above mentioned mechanism), which is claimed in the hereby Patent Application (as a second Improvement Patent), is consisting in removing one of the two chains which are part of the mechanism, together with its corresponding chain wheel, sprocket wheel and gear shift or tension pulley, thus permitting the installation of two pairs of gears on that side of the frame, specifically on the side from which said components were removed. In this manner, greater configuration similarity is achieved to conventional bicycles, permitting in addition having sufficient space available on the other side of the frame for installing several chain wheels for gear shifting, as in the case of conventional bicycles.

Through this solution, in which $\delta$ (chain wheel off-centering / primitive radius of the ring gear) is equal to double the value of $\varepsilon$ ($\varepsilon$ being the eccentricity of the gears), drive from one of the pedal rods is conveyed directly by chain, while the opposite pedal rod is affected by drive through gears, specifically through the two pairs of mounted gears, one of them mounted on one of the axles and the other mounted on the other axle in the frame, one of these axles corresponding to the pedals axle itself.

The gears are advantageously elliptic, so that both non-integral assemblies corresponding to the pedal rods rotate independently around one same axle, specifically the one considered to be the main or pedals axle. The gears in each pair are in each case attached by one of their focuses to the corresponding axle.

The four elliptic gears in question have equal eccentricity and size, and they can be circular and off-centered, if necessary.

A second improvement, also claimed in this Patent Application, consists in that the circular eccentric chain wheel is replaced by a non-circular eccentric chain wheel (ovoid) having geometric characteristics which derive in optimized power output. Furthermore, it is possible to incorporate two non-circular chain wheels with these characteristics directly onto the mechanism referred to as the first Improvement Patent to replace the eccentric circular chain wheels and thus improve synchronization.

The shape of the non-circular eccentric chain wheel corresponding to this second improvement is the result of taking the envelope of the straight lines which the chain adopts at each instant for the transmission between the chain wheel and the sprocket wheel, when the development variation of said front chain wheel is sinusoidal in reference to time, for a constant speed of the bicycle to which is applied the mechanism.

Said shape is dependent on: chain wheel perimeter (or its number of teeth); eccentricity $\varepsilon$ of the elliptic gears used; distance between pedals axle and rear bushing; and size of the sprocket wheel used. However, this latter parameter has a much lesser influence, and allows the election (for the design of each chain wheel) of an average value among the various sprocket wheels that can be associated to said chain wheel. Thus, the shape of the chain wheel depends on its own size, i.e. N (namely the number of teeth or simply the perimeter of the chain wheel), and depends as well on gear eccentricity $\varepsilon$, and on the distance D from the pedals axle to the chain exit point from the sprocket wheel (average value). This is the point where the straight lines are taken from which generate the above mentioned envelope which shapes the chain wheel.

The advantages that implies the first improvement of the present Patent Application may be summarized as follows:

- The bicycle incorporating the mechanism based on said first improvement is more compact and lightweight and less complex, the number of parts and components is reduced, and is consequently less expensive to manufacture. Furthermore, since it has fewer movable parts, undesirable and unnecessary friction is prevented.
- The bicycle is more similar to conventional ones.
- The mechanism is simpler, in view that in addition to eliminating a chain wheel, a chain, one set of sprocket wheels and a gear shift, a special bushing incorporating sprocket wheels on both sides is replaced by a standard bushing.
- It allows for the installation of both gear pairs on the same side of the bicycle frame, thus providing greater space for the gear shift, allowing for chain wheel shifts as well as sprocket wheel shifts.

Concerning the advantages deriving from the second improvement, the following may be mentioned:

- Power output is optimized and greater pedalling comfort is provided.
- In the event that off-center ovoid chain wheels are used for mechanisms requiring two chains, synchronization between the elliptic gear system (defining angles between pedals) and the positions of each pedal imposed by the geometry of its respective chain wheel during the cycle is optimized, the angle positions imposed by both systems coinciding and resulting in improved synchronization of the chains, sprocket wheel and chain wheel systems, thereby unloading the gear assembly of part of this responsibility and removing the need to provide the gear synchronization mechanism with extreme precision requirements.

In order to complement the subsequent description, and with the aim of helping to achieve a better understanding of the characteristics of the invention, a detailed explanation and a set of drawings (both being part of this description) attached to this description are following. In the drawings and the detailed description, it is represented, as an example but not in a imitative way the following:

Figure 1 shows a schematic view or lower plan of the mechanism according to the improvements of the invention.
Figure 2 shows another schematic view, in this case a side elevation, of the same mechanism applied to a bicycle frame or structure.
Figure 3 shows a general perspective view of the mechanism displayed in the previous figures.
Figures 4 to 11 show contours which correspond to respective chain wheels with four different developments and two different eccentricities.

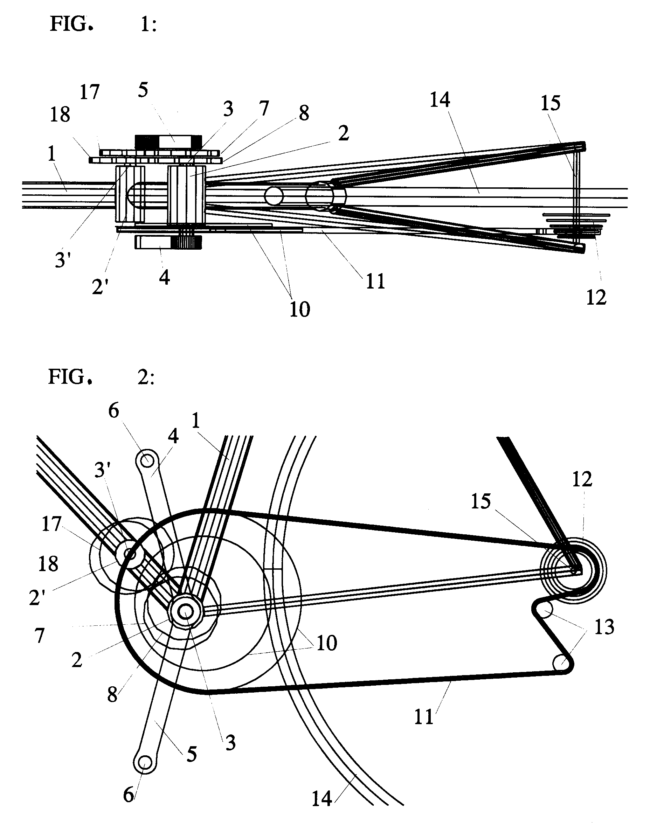

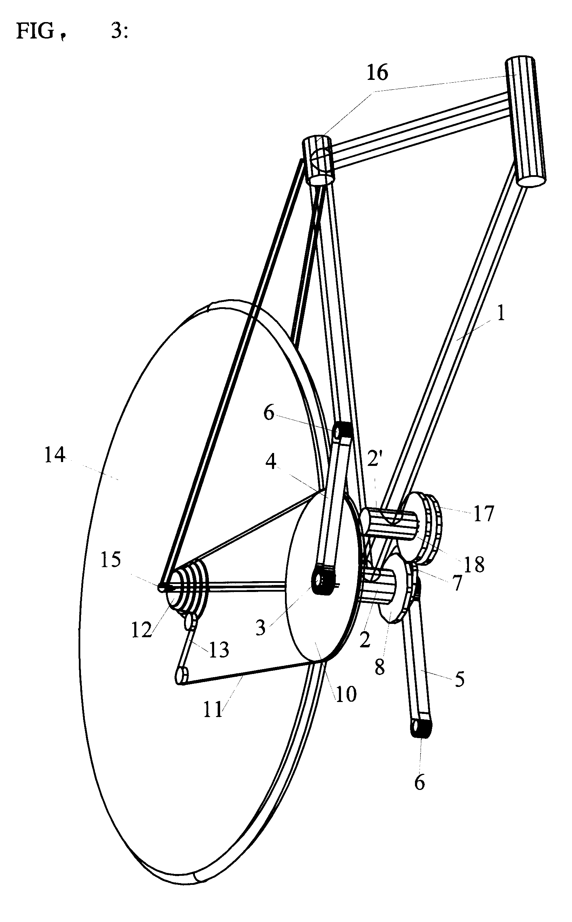

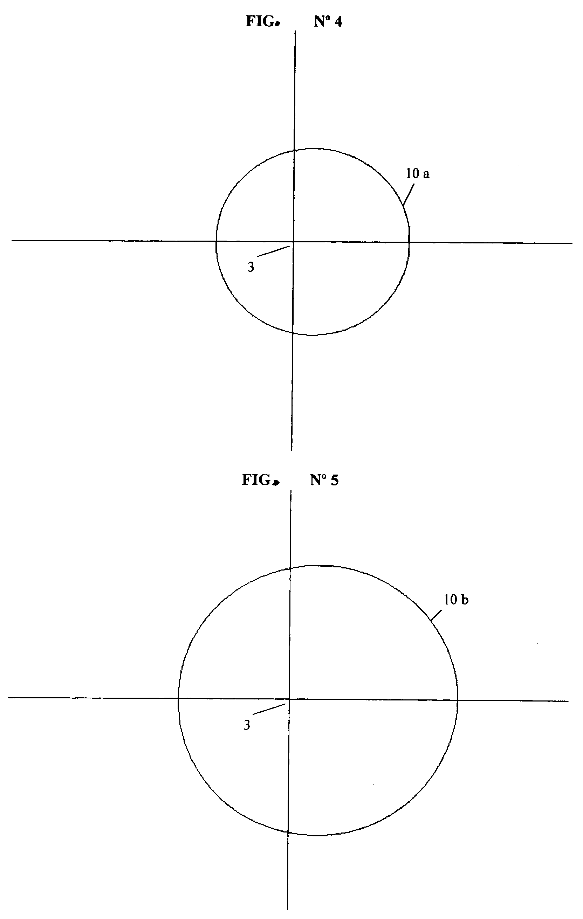

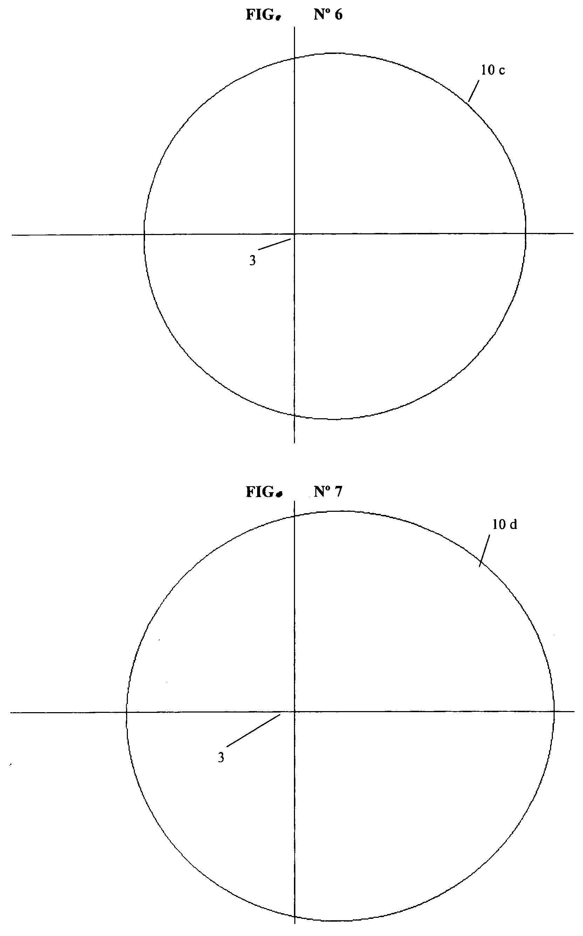

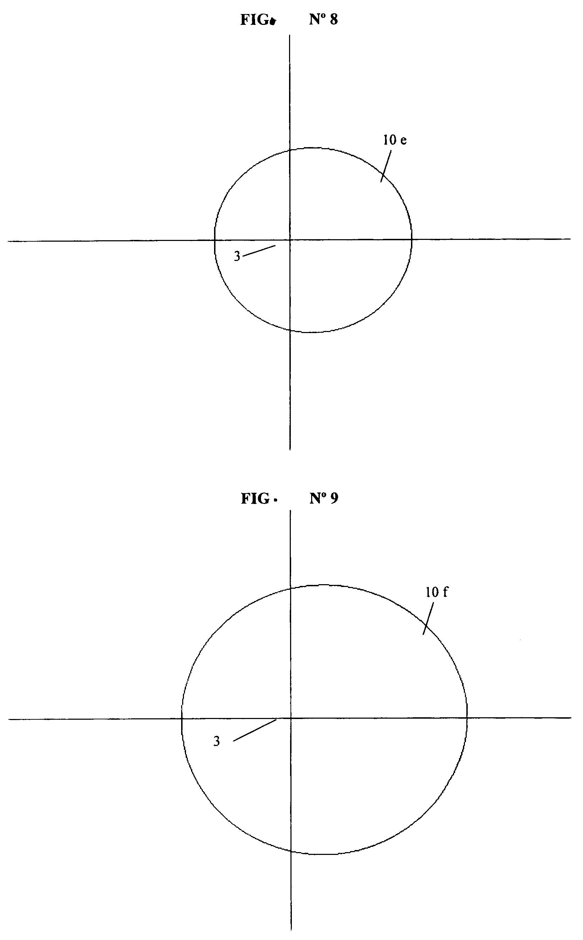

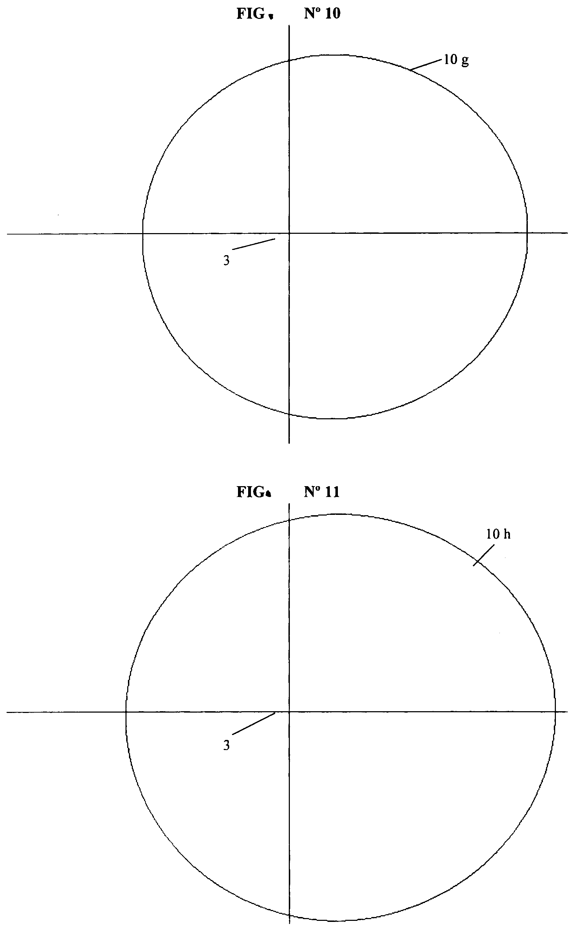

As it can be seen in the referred figures, the mechanism with the improvements in the invention can be attached to a bike frame (1), on which are mounted the main axle or pedals axle (3) and the secondary axle (3'), both axles being assembled to their corresponding housings (2) and (2'). Pedal rods (4) and (5) are fitted to both ends of the pedals axle (3) (so that they can turn independently from each other), being the right pedal rod integral with the pedals axle and being the left pedal rod able to turn freely in respect to the pedals axle. Both pedal rods are properly finished (6) in one of their extremes so that respective pedals can be assembled to them.
Elliptic gears (7) and (8) are mounted on the side of the left pedal rod (5), and said gears are coupled with the elliptic gears (17) and (18), mounted the first ones on the pedals axle, and the second ones are mounted on the secondary axle (3'). That is, power is transmitted to the chain wheels (10) which are mounted on the opposite end of the pedals axle (3), and from chain wheels through a chain (11) towards the sprockets (12) and gear shift (13), being said sprockets (12) mounted on the rear wheel (14) axle (15) of the bike, which frame is properly built (16) as usual so that handlebar and saddle can be assembled to the bike.
Thus, one of the improvements of the invention consists in eliminating one of the chains and associated chain wheel, sprocket wheel and gear shift, enabling the two pairs of elliptic gears (7-8) and (17-18) to be placed on the same side of the frame (1), precisely on the side from where the above mentioned elements were removed.
Bearing in mind parameter $\delta$ (chain wheel off-centering / primitive radius of the ring gear) and eccentricity $\epsilon$ of the gears according to the improvement, and if $\delta = 2 \cdot \epsilon$ is used, one single chain will suffice, and drive from one of the pedal rods (4) is provided directly through chain (11), while the opposite pedal rod is affected by a gear drive.
Operation of the mechanism according to the improvements described and shown in Figures 1, 2 and 3, is as follows:
Right pedal rod (4) is integral with elliptic gear (8) and chain wheel set (10), which provides power output through chain (11). This assembly is mechanically coupled, by means of the secondary axle (3') integral with elliptic gears (18) and (17), to the assembly formed by left pedal rod (5) and elliptic gear (7).
The two independent assemblies corresponding to the pedal rods rotate independently (although synchronized through the secondary axle assembly) around one same axle (3) lodged in the pedals axle housing (2), both gears (7) and (8) being centered in one of their ellipse focuses in respect to this axle.
Likewise, gears (17) and (18) are centered in one of their ellipse focuses in respect to secondary axle (3') lodged in the second housing (2'), and are furthermore offset in 180°.
In view that when one of the pedals is in front and the other behind the pedal rods must be in a 180° position, the relative angle position between each pedal rod and its corresponding elliptic gear must be such that when each pedal rod is in its most forwarded position (horizontal position) the corresponding gear should be transmitting drive with a maximum radius (from the point farthest from the axle).
The four elliptic gears (7, 8, 17 and 18) must have the same eccentricity and size; if required, the gears may be circular and off-centered instead of elliptic.
With this improvement, a bicycle is obtained which is driven by synchronized independent pedals with sinusoidal type variable development that is more compact, more lightweight and less complex, as a result of fewer parts being involved, than its predecessors, and is consequently less expensive to manufacture. Furthermore, in view that it has fewer movable parts, undesirable and unnecessary friction is prevented.

The advantages of this mechanism in respect to the one using two chains are the following:

- Less difference in respect to the shape of a standard bicycle.
- Greater simplicity of the mechanism, since the use of one chain wheel, one chain, one set of sprocket wheels and a gear shift is avoided, all these components being removed without replacing them with any other part; furthermore, a special bushing incorporating respective sprocket wheels on both sides is replaced by a standard bushing.
- It allows for pairs of gears to be installed on the same side of the bicycle frame (1), thereby providing a larger space for the gear shift, as in a standard bicycle. Thus, as can be appreciated from Figure 1 and 2, it allows for gear shifts in both the sprocket wheels and in the chain wheels.

A second improvement, applicable to the mechanism fitted with the first improvement, as previously described, consists in replacing the eccentric circular chain wheel by an eccentric ovoid (non circular) chain wheel, the geometric characteristics of which optimize the power output.

Consequently, this is an eccentric chain wheel having an ovoid shape, so that when chain speed is constant (and therefore also in the bicycle) the development distribution is sinusoidal in time, or, in other words, the pedal rod speed distribution varies sinusoidally according to the rotation angle of the pedal rod, this coinciding with the speed variation of the pedal rods based on their position when the speed of the secondary axle is constant. Therefore, power output is equal to that of a circular wheel chain, with the same development applied to the secondary axle, although in the opposite rotational direction, i.e. in the direction in which the bicycle advances.

In this manner, identical kinematics is achieved for each pedal, thus optimizing the movement of the legs, since a single round chain wheel involves a slight variation between the speeds of both legs, a variation which in fact is imperceptible in actual practice.

The shape of the chain wheel is the result of taking the envelope of the straight lines adopted by the chain (in traction between rear wheel sprocket and chain wheel) when development variation of the chain is sinusoidal for constant bicycle speed.

The sinusoidal function providing this development is as follows:

$$r(t) = \frac{1 + 2 \cdot \varepsilon \cdot \cos(\omega \cdot t) + \varepsilon^2}{1 - \varepsilon^2} \cdot R$$

where R is the radius of the equivalent circular chain wheel:

$$R = \frac{1}{4 \cdot \sin(\pi/N)} \ inches$$

and $\omega \cdot R$ is the chain speed.

The angular speed $\Omega$ of the pedal rods derives from the following:

$$\Omega(\theta) = \frac{1 + 2 \cdot \varepsilon \cdot \cos(\theta) + \varepsilon^2}{1 - \varepsilon^2} \cdot \omega$$

and thus the sinusoidal function which provides development in function of the angle is as follows:

$$r(\theta) = \frac{1 - \varepsilon^2}{1 + 2 \cdot \varepsilon \cdot \cos(\theta) + \varepsilon^2} \cdot R$$

In this manner, it is intended to take the envelope of the straight lines (tangent to the chain wheel) which rotate with it in respect to its axle, the distance from this straight line to this axle ($r(\theta)$= chain wheel equivalent transmission ratio ) varying with the angle of the pedal rod (at the time of being drawn) as the reverse of a sinusoid; said straight lines being drawn at each moment from a fixed point at a distance D from the chain wheel rotation axle.

It has already been stated that $\varepsilon$ is the eccentricity of the gears.

In view that D is considered to be a fixed value for each chain wheel and given that the relative shape only has a minimal variation for small variations in size, several chain wheels corresponding to four developments and two eccentricities are shown hereunder:

| | | |
|---|---|---|
| Figure 4: | $(\varepsilon,N)=(0.11, 27)$ | Chain wheel 10a |
| Figure 5: | $(\varepsilon,N)=(0.11, 39)$ | Chain wheel 10b |
| Figure 6: | $(\varepsilon,N)=(0.11, 53)$ | Chain wheel 10c |
| Figure 7: | $(\varepsilon,N)=(0.11, 59)$ | Chain wheel 10d |
| Figure 8: | $(\varepsilon,N) = (0.125, 27)$ | Chain wheel 10e |
| Figure 9: | $(\varepsilon,N) = (0.125, 39)$ | Chain wheel 10f |
| Figure 10: | $(\varepsilon,N)=(0.125, 53)$ | Chain wheel 10g |
| Figure 11: | $(\varepsilon,N) = (0.125, 59)$ | Chain wheel 10h |

All the figures correspond to chain wheels having a right rotation direction when in drive, the intersection of the axes being the point corresponding to the rotation axle (3), that is to say, that of the active pedal axle.

The eight chain wheels are shown in the same 0.424:1 scale.

The angle position of the pedal rod is such that, when the chain attacks the chain wheel at its maximum radius, the pedal rod is approximately 90° forward from the vertical upper position.

Therefore, according to the above first improvement of the invention, the use of these said chain wheels in a bicycle optimizes power output and tends to provide greater pedaling comfort.

If off-centered ovoid chain wheels are used in the bicycle fitted with two chains, synchronization between the elliptic gear system (defining the angle between the pedals) and the positions of each pedal imposed by the geometry of their respective chain wheels is optimized during the cycle and the angle positions imposed by both systems coincide, resulting in improved synchronization of the system composed of chain, sprocket wheel and chain wheel and unloading from the gear assembly part of that responsibility, thus eliminating the need to provide great precision to the gear synchronization mechanism.

## Claims

1. Improvements in the Invention Patent P9402381, "Human drive system using synchronized independent pedals with sinusoidal type variable development", characterized by mounting on a same side of the bicycle frame two pairs of elliptic gears mounted on the same side of the frame, one of said pairs being mounted on the main axle or pedals axle, while the other pair, which engages the previous gears, is mounted on the secondary axle; characteristic in that, on the other side of the frame, sufficient space is provided to allow for the mounting of several gear shift chain wheels, said mounting being done on the end of the main axle or pedals axle on that side, power being transmitted from one of said chain wheels and through its corresponding chain to one of the sprocket wheels mounted in association with a gear shift on the axle of the rear wheel.

2. Improvements in the Invention Patent P9402381,"Human drive system using synchronized independent pedals with sinusoidal type variable development" according to Claim no. 1, characterized in that one of the pedal rods is integral with the chain wheel assembly corresponding to the power output, said assembly being mechanically coupled through the secondary axle, to the assembly formed by the opposite pedal rod and the external elliptic gear of the two gears mounted on the respective side of the main axle or pedals axle, being foreseen that both assemblies (corresponding to the pedal rods) rotate independently in respect to the main axle or pedals axle, the first pair of gears being centered on one of their focuses in respect to said main axle or pedals axle, while the second pair of gears is centered on one of its focuses in respect to the secondary axle.

3. Improvements in the Invention Patent P9402381, "Human drive system using synchronized independent pedals with sinusoidal type variable development" according to Claims 1 and 2, characterized in that the power output chain wheel through which force is transmitted to the rear wheel by means of the corresponding chain and sprocket wheels fitted with gear shift, is of an ovoid eccentric shape, its perimeter shape resulting from taking the envelope of the straight lines adopted at each instant by the chain providing drive between the chain wheel and the gear when development variation of the chain wheel is sinusoidal in time for constant bicycle speed, depending on eccentricity of the elliptic gears, distance from pedals axle to the rear wheel axle, size of the sprocket wheel used and size of the chain wheel.

**Amended Claims**

[Filed at the International Office on December the 10th, 1997 (10.12.97); claims 1 to 3 replaced by claims 1 and 2 modified (1 page)]

1. **Improved synchronized independent pedals human traction mechanism with sinusoidal type variable development,** characterized by the use of two pairs of elliptic gears (or off-centered circular ones as alternative) and an eccentric circular chain wheel, which eccentricity is a function of gears eccentricity, said chain wheel transmitting all the power through corresponding chain towards the rear wheel. Said four gears accomplish a double mission: one is synchronizing the independent pedals, the other is allowing power transmission from left pedal rod towards right pedal rod, which is integral with the chain wheel (or set of chain wheels, allowing speed shifting). Said elliptic gears are assembled to their corresponding axles by one of the focuses of the ellipse, and are mounted preferably on the left side of the bicycle frame, so that the space required by the set of chain wheels and chain wheel shifter can be respected (at the right side of the bicycle frame). Two of the gears are assembled to the main axle or pedals axle, so that each one is integral with each corresponding pedal rod, forming this way two pedal rod-gear assemblies independent from each other: right gear assembly being integral with pedals axle and left one being able to rotate freely on this axle. The other two gears are integral with each other in a way that they are rotated 180° to each other and integral with another secondary axle, which is parallel to pedals axle. The mechanical binding between pedal rods is achieved by the coupling of each of the gears on the secondary axle to their corresponding pedal rod-gear assemblies. As a consequence, the angle that the secondary axle turns, coordinates the kinematics of pedal rods, by determining the angular position of pedal rods and the relative angle between them, assuring this way sychronization of pedal rods, and allowing furthermore power transmission from left pedal rod to the right one. So right pedal rod, which is integral with the chain wheel set which corresponds to power output, transmits power directly to the rear wheel by means of the corresponding chain and sprockets with tension pulley shifter, while left pedal rod transmits power by means of the gears, first to right pedal rod (and therefore to chain wheel set), and from there to the rear wheel.

2. **Mechanism according to Claim 1,** characterized by being said chain wheel (which delivers power) an eccentric ovoid. The perimeter shape of said chain wheel resulting from taking the envelope of the straight lines adopted at each instant by the chain (in traction between rear wheel sprocket and chain wheel), when development variation ($r(\theta)$ = chain wheel tranmission ratio ) of the chain wheel is sinusoidal for constant bicycle speed. Said chain wheel shape depends as well on elliptic gears eccentricity, on distance from pedals axle to rear wheel axle and on sizes of used chain wheel and rear wheel sprocket.

**STATEMENT UNDER ART. 19.1 PCT**

1. Modified and mixed Claims no. 1 and no. 2, in order to achieve a double aim:

**-Obtaining a text which is clearer, simpler, and more adapted to the language used in the description,** so that after the modification, claims are more easily understandable To help do this, we have also eliminated all references to the previous patent, so that claims themselves contain now all the necessary information.

**-Gathering in a single claim all aspects which are referred to a single inventive activity.** Claim no. 1 contained an incomplete description in the original text, because the invention object was only made concrete in Claim no. 2. Because of this reason, Claim no. 1 originated an "X" quotation in your International Search Report, while there were no quoted documents in any categories for Claim no. 2. After mixing Claims no. 1 and no. 2 in a single modified Claim no. 1, the ambiguity that was contained in former Claim no. 1 is avoided, and only one inventive activity is claimed, which is the one contained in the description. So it is claimed a single mechanism in a single Claim, being in fact this mechanism new and different to the ones in quoted documents. Explanation to the differences from "X" quoted document (FR 2633241 A):

- The invention there claimed is characterized by the fact that rotation speed of pedals is determined by a binding of both pedals by means of pairs of identical elliptic gears, each one attached to a pedal.
- However, speed variation of the right pedal rod (sinusoidal type) in the mechanism claimed in our modified Claim no. 1 is a consequence of its binding to the eccentric chain wheel, while the speed corresponding to the left pedal rod depends on the transmission ratios of both pairs of elliptical gears applied to the right pedal rod, and therefore applied on the eccentric chain wheel kinematics.

2. Modified Claim no. 3 and changed its numeration, so that it becomes Claim no. 2 in the new text. The modification has only consisted of a clarification of the word "development", which has been literally taken from the very description.

EP 0 913 323 A1

FIG.    1:

FIG.    2:

FIG， 3:

FIG.    Nº 4

10 a

3

FIG.    Nº 5

10 b

3

FIG.     N° 6

10 c

3

FIG.     N° 7

10 d

3

**FIG.** N° 8

**FIG.** N° 9

FIG. Nº 10

10 g

3

FIG. Nº 11

10 h

3

## INTERNATIONAL SEARCH REPORT

| International application No. |
|---|
| PCT/ES 97/00176 |

**A. CLASSIFICATION OF SUBJECT MATTER**

$IPC^6$: B62M 9/08, 1/02

According to International Patent Classification (IPC) or to both national classification and IPC

**B. FIELDS SEARCHED**

Minimum documentation searched (classification system followed by classification symbols)

$IPC^6$: B62M

Documentation searched other than minimum documentation to the extent that such documents are included in the fields searched

Electronic data base consulted during the international search (name of data base and, where practicable, search terms used)

CIBEPAT, EPODOC, WPI, PAJ

**C. DOCUMENTS CONSIDERED TO BE RELEVANT**

| Category* | Citation of document, with indication, where appropriate, of the relevant passages | Relevant to claim No. |
|---|---|---|
| X | FR 2633241 A (FOUEILLASSAR) 29 December 1989 (29.12.89) see the whole document | 1 |
| A | DE 3404562 A (GREIFENBERG) 22 August 1985 (22.08.85) see the whole document | 1 |
| A | FR 2601321 A (SOCIETE CIVILE MRM 3) 15 January 1988 (15.01.88); see the whole document | 1,3 |
| A | GB 2277065 A (DRAGAN) 19 October 1994 (19.10.94) Page 2, line 32 - page 3, line 7; fig. 1 | 3 |
| A | SU 1562219 A (NAZAROV) 7 May 1990 (07.05.90) | |
| A | DE 4103946 A (MARTENS) 13 August 1992 (13.08.92) | |
| A | GB 2243351 A (LAWRENCE) 30 October 1991 (30.10.91) | |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 November 1997 (11.11.97) | 14 November 1997 (14.11.97) |

| Name and mailing address of the ISA/ | Authorized officer |
|---|---|
| S.P.T.O. | |
| Facsimile No. | Telephone No. |

Form PCT/ISA/210 (second sheet) (July 1992)

## INTERNATIONAL SEARCH REPORT
Information on patent family members

| International Application No |
|---|
| PCT/ES 97/00176 |

| Patent document cited in search report | Publication date | Patent familiy member(s) | Publication date |
|---|---|---|---|
| FR 2633241 A | 29.12.89 | NONE | |
| DE 3404562 A | 22.08.85 | NONE | |
| FR 2601321 A | 15.01.88 | NONE | |
| GB 2277065 A | 19.10.94 | NONE | |
| SU 1562219 A | 07.05.90 | NONE | |
| DE 4103946 A | 13.08.92 | NONE | |
| GB 2243351 A | 30.10.91 | NONE | |

Form PCT/ISA/210 (patent family annex) (July 1992)